# EUROPÄISCHE PATENTANMELDUNG

(11) **EP 1 065 040 A2**
(43) Veröffentlichungstag der Anmeldung: **03.01.2001**
(21) Anmeldenummer: 00112852.9
(22) Anmeldetag: 17.06.2000
(51) Int. Cl.: B29C 51/16

(54) **Maschine zum reihenweisen Tiefziehen von becherförmigen Behältern**

(30) Priorität: 30.06.1999 DE 29911272 U
(71) Anmelder: Maier Packaging GmbH, 83224 Grassau (DE)
(72) Erfinder: Herr Stefan Maier, 83250 Marquartstein (DE)
(74) Vertreter: Busse & Busse Patentanwälte

(57) **Zusammenfassung**

Eine Maschine ist zum reihenweisen Tiefziehen von becherförmigen Behältern (2) in einer Kunststoffolienbahn (4) und Anbringen einer Banderole (5) auf der Außenseite der Behälter bei deren Bildung vorgesehen. Ein von der Kunststoffolienbahn (4) überlaufenes Formgehäuse (6) ist mit in diesem ausgebildeten, in Reihen quer zur Förderrichtung (7) der Kunststoffolienbahn (4) angeordneten Formnestern (7) versehen, in deren Boden (8, 8') jeweils eine Öffnung (20) für einen manschettenförmig vorgeformten und mittels einer Banderoliervorrichtung (12) zugeführten Banderolenstreifens (5') vorgesehen ist. Die einer Reihe von Formnestern (7) zugeordneten Banderoliervorrichtungen (12) sind als Gruppe (A; B; A'; B') in einer gemeinsamen Arbeitsebene nebeneinander angeordnet. Die erfindungsgemäße Maschine zeichnet sich dadurch aus, daß bei in mehreren Reihen (R; R') im Formgehäuse (6) ausgebildeten Formnestern (7) die diesen Reihen zugeordneten Gruppen von Banderoliervorrichtungen (A, B; A', B') in zumindest zwei unterschiedlichen Arbeitsebenen (C; D) angeordnet sind.

## Beschreibung

Die Erfindung betrifft eine Maschine zum reihenweisen Tiefziehen von becherförmigen Behältern gemäß dem Oberbegriff des Anspruchs 1.

Bekannte Maschinen zum reihenweisen Tiefziehen von becherförmigen Behältern sind mit einer Füll- und einer Verschließmaschine zum Abfüllen von Nahrungsmitteln, insbesondere Molkereiprodukten in Becher, als Baueinheit verbunden. Im Bereich der Tiefziehmaschine sind dabei für zwei Reihen von Bechern Banderoliervorrichtungen zur Zuführung von Banderolen oder Etiketten vorgesehen, wobei diese in einer gegenläufigen Zuführrichtung zugeführt werden und nur die zwei Reihen von in entsprechenden Formnestern der Tiefziehmaschine befindlichen Bechern banderolierbar sind. Eine Formvorrichtung gemäß DE 36 36 767 C2 ist mit zwei jeweils zwei Etiketten-Reihen bildenden und in einer Ebene ebenfalls gegläufige Zuführrichtungen aufweisenden Beschickungsvorrichtungen versehen, die mit einer als Drehteller ausgebildeten Übergabevorrichtung so zusammenwirkt, daß mit dem Drehteller vier Reihen von Bechern in der Formvorrichtung mit einer Banderole zu beschicken sind. Die Vorrichtung baut insgesamt aufwendig und ist mit den beiden Beschickungsvorrichtungen auf die Banderolierung von vier Becher-Reihen beschränkt.

Die Erfindung befaßt sich mit dem Problem, eine Maschine zum reihenweisen Tiefziehen von becherförmigen Behältern zu schaffen, deren Banderolenzuführung eine Beschickung von mehreren Becher-Reihen in einem Takt bei geringem Raumbedarf ermöglicht und dabei auch mit geringem technischem Aufwand in bestehende Maschinen integrierbar ist.

Die Erfindung löst diese Aufgabe mit einer Vorrichtung mit den Merkmalen des Anspruchs 1. Hinsichtlich wesentlicher weiterer Ausgestaltungen wird auf die Ansprüche 2 bis 16 verwiesen.

Die erfindungsgemäße Maschine zum reihenweisen Tiefziehen von becherförmigen Behältern ist als eine kompakte Baueinheit ausgebildet, deren Formgehäuse mit in unterschiedlichen Arbeitsebenen gruppierten Banderoliervorrichtungen zusammenwirkt. Diese haben einen geringen Raumbedarf und arbeiten mit kurzen Förderwegen und sichern eine schnelle Beschickung der Formnester. Durch die Gruppierung in übereinander gelegenen Arbeitsebenen können mehrere Gruppen auf einer Seite der Tiefziehmaschine angeordnet werden. Die Anzahl der übereinander gruppierten Arbeitsebenen ist dabei weitgehend beliebig, so daß die Anzahl der gleichzeitig beschickbaren Reihen von Formnestern kundenspezifisch angepaßt werden kann. Insbesondere kann die Anzahl der beschickbaren Reihen von Formnestern durch eine Anordnung von beidseits des Formgehäuses mit entgegensetzter Zuführrichtung arbeitenden Gruppen von Banderoliervorrichtungen so bemessen werden, daß die beispielsweise zur Abfüllung von Nahrungsmittel in Bechern vorgesehene Becheranzahl je Takt wesentlich gesteigert werden kann und damit eine Produktivitätserhöhung derartiger Baueinheiten erreichbar ist. Dabei ist mit der Maschine auch die Möglichkeit eröffnet, mit einem entsprechenden Formgehäuse gegenkonische Becher bzw. Behälter mit Hinterschneidungen zu formen.

Weitere Einzelheiten und vorteilhafte Ausgestaltungen ergeben sich aus der nachfolgenden Beschreibung und der Zeichnung, in der zwei Ausführungsbeispiele des Gegenstands der Erfindung näher veranschlaulicht sind. In der der Zeichnung zeigen:
- Fig. 1: eine Prinzipdarstellung der Maschine mit zwei übereinander angeordneten Gruppen von Banderoliervorrichtungen im Bereich eines zum Tiefziehen vorgesehenen Formgehäuses mit zwei Reihen von Formnestern,
- Fig. 2: eine Prinzipdarstellung ähnlich Fig. 1 mit der Maschine in einer während eines Vorschubtaktes vorgesehenen Freigabestellung für die Becher-Reihen,
- Fig. 3 bis Fig. 6: jeweilige Seitenansichten des Formgehäuses mit den zwei Gruppen von übereinander angeodneten Banderoliervorrichtungen in unterschiedlichen Arbeitsphasen,
- Fig. 7: eine teilweise geschnittene Draufsicht der beiden Gruppen von Banderoliervorrichtungen mit deren Zuführabstand zur jeweiligen Reihe von Formnestern,
- Fig. 8: eine Draufsicht ähnlich Fig. 7 mit den beiden Gruppen der Banderoliervorrichtungen, wobei eine der Gruppen in Strich-Darstellung verdeutlicht ist,
- Fig. 9: eine zweite Ausführung der Maschine ähnlich Fig. 1 mit einem vier Reihen von Formnestern aufweisenden Formgehäuse, dem beidseits je zwei Gruppen von Banderoliervorrichtungen mit entgegengesetzten Zuführrichtungen zugeordnet sind,
- Fig. 10: eine Prinzipdarstellung ähnlich Fig. 9 mit einer Arbeitsphase bei Einführung von Banderolen in die Formnester,
- Fig. 11 bis 13: jeweilige Prinzipdarstellungen ähnlich Fig. 4 bis 6 mit einem gegenkonische Formnester aufweisenden Formgehäuse,
- Fig. 14: eine Draufsicht auf das Formgehäuse gemäß Fig. 13 mit in einer Öffnungsstellung befindlichen Gehäuseteilen und
- Fig. 15: eine Draufsicht ähnlich Fig. 14 mit geschlossenem Formgehäuse.

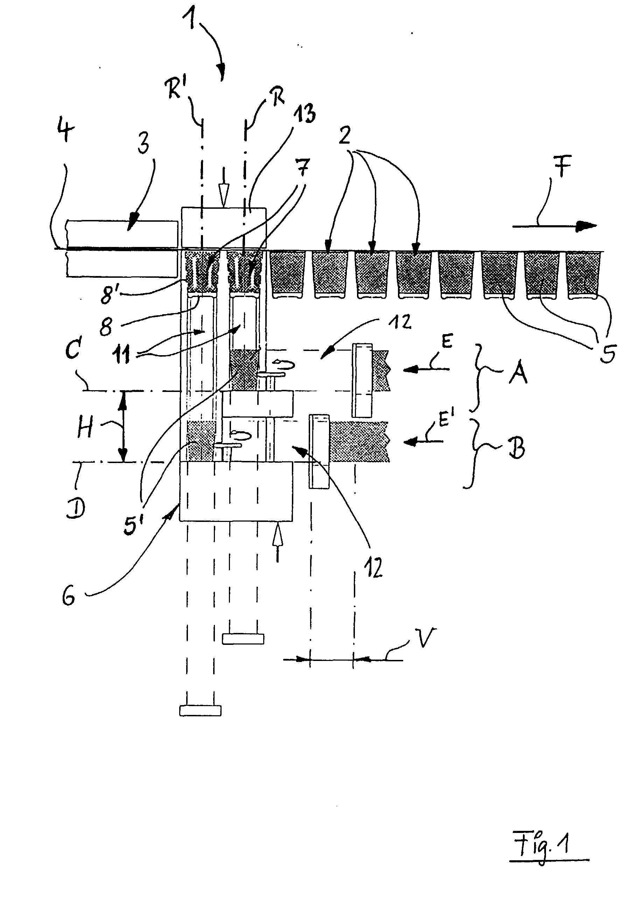

In Fig. 1 ist eine insgesamt mit 1 bezeichnete Maschine zum reihenweisen Tiefziehen von becherförmigen Behältern 2 in einer Kunststofffolienbahn 4 dargestellt, die in einer Förderrichtung F über eine Heizstation 3 zugeführt wird. Bei der Ausbildung der Behälter 2 in der Kuststofffolienbahn 4 wird gleichzeitig eine Banderole 5 auf der Außenseiten der Behälter 2 angebracht. Für den an sich bekannten Tiefziehvorgang ist ein Formgehäuse 6 vorgesehen, das oberseitig von der Kunststofffolienbahn 4 so überlaufen wird, daß mittels eines nicht näher dargestellte Stempel aufweisenden Oberwerkzeugs 13 Becher 2 geformt werden.

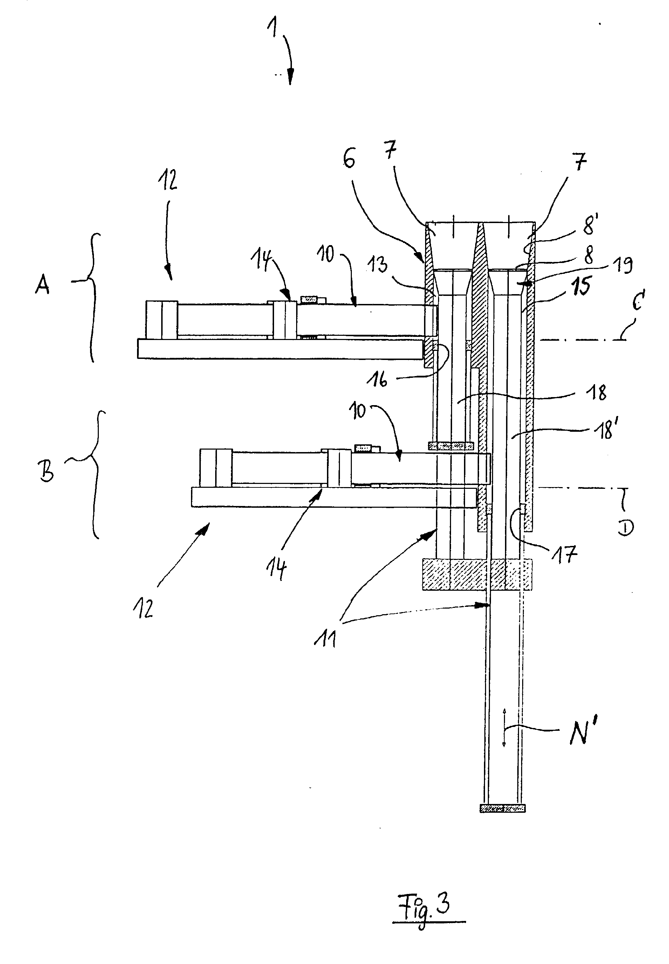

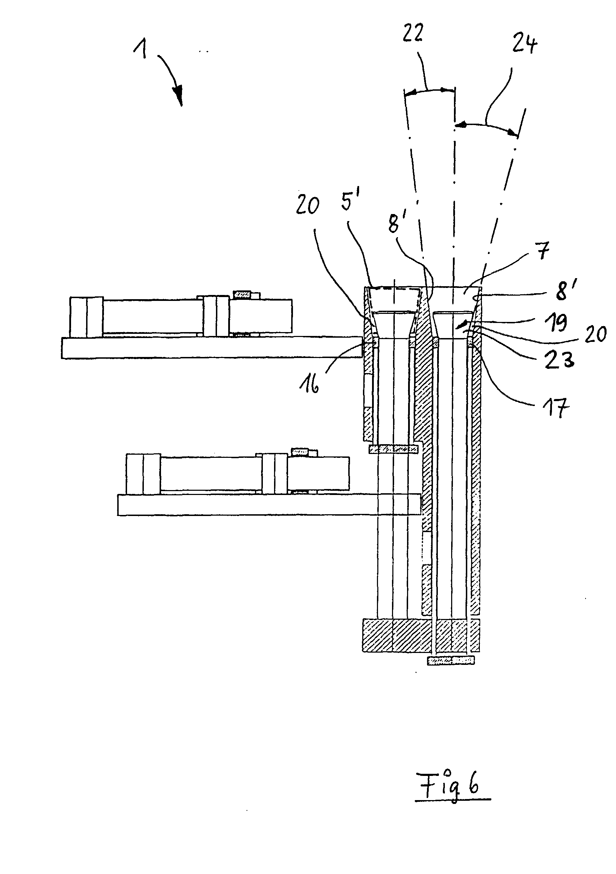

Das Formgehäuse 6 ist mit Reihen R, R' von quer zur Förderrichtung F der Kuststofffolienbahn 4 angeordneten Formnestern 7 versehen, deren Boden- bzw. Wandungsbereich 8, 8' eine zur Einführung eines manschettenförmig vorgeformten Banderolenstreifens 5' vorgesehene Öffnung 20 (Fig. 6) aufweist, über die der Banderolenstreifen 5' durch den Bereich des Formnestbodens 8 in den Formraum verlagerbar ist. Der Banderolenstreifen 10 (Fig. 3) wird bei bekannten Maschinen 1 in den Formraum der Formnester 7 mittels eines allgemein mit 11 bezeichenden Hubgliedes (Fig. 1) eingeführt.

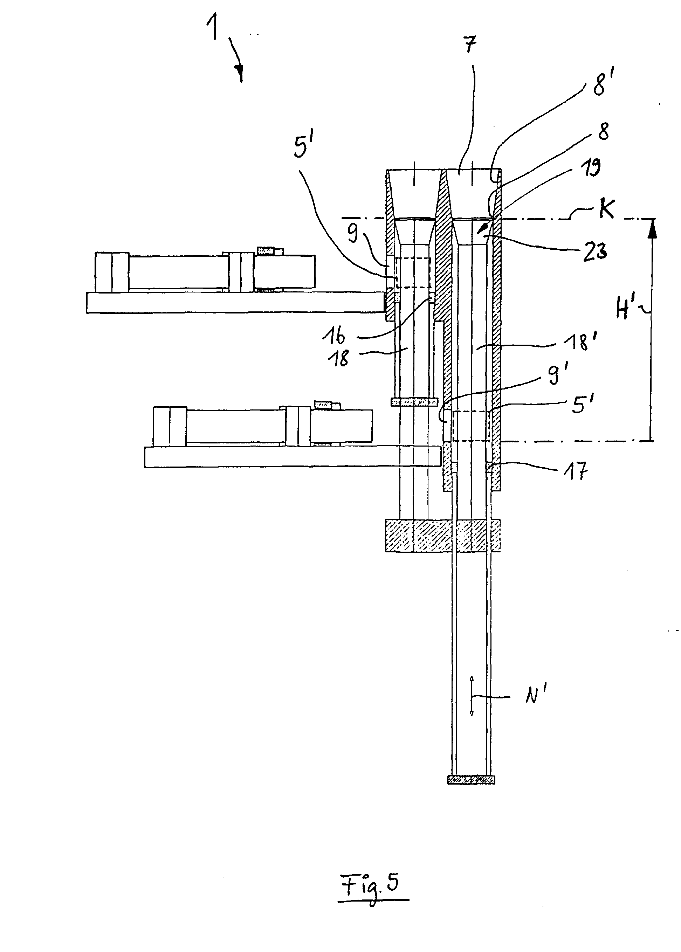

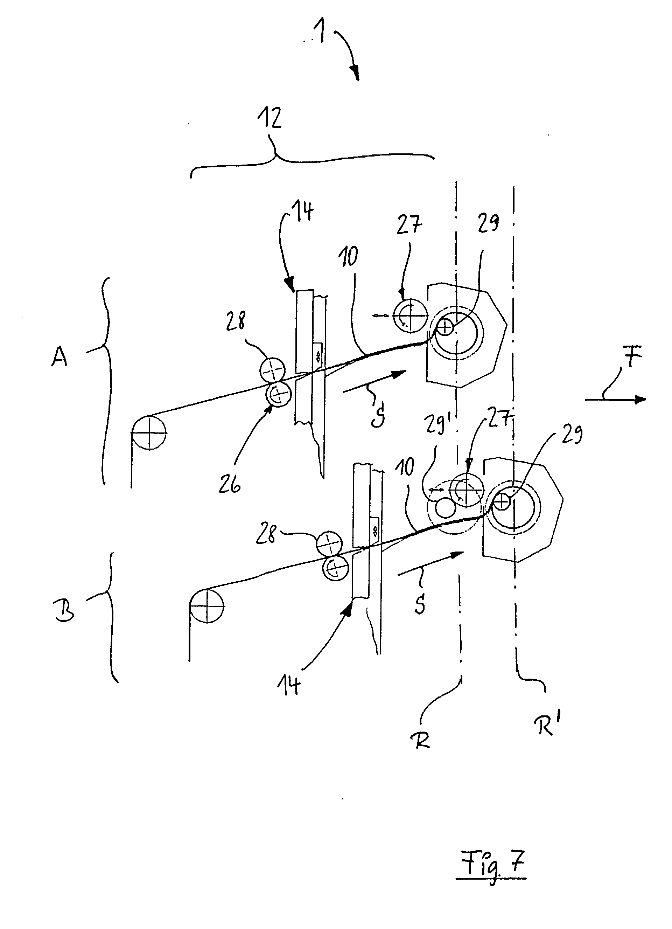

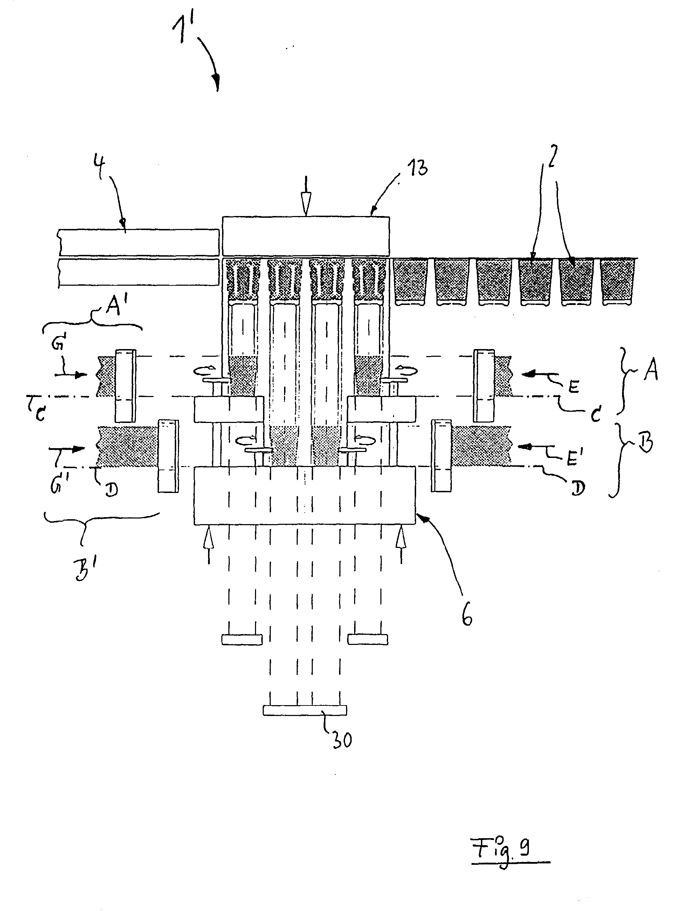

Den Formnestern 7 ist eine entsprechende Anzahl jeweiliger Banderoliervorrichtungen 12 zugeordnet, die den unverformten Banderolenstreifen 10 (Fig. 3) von einer nicht näher dargestellten Vorratsbahn mittels einer Schneidvorrichtung 14 (Fig. 7) abteilt, den Banderolenstreifen 10 in einer im wesentlich parallel zur Förderrichtung F der Kunststofffolienbahn 4 verlaufenden Richtung S (Fig. 7) in den Bereich unterhalb der Formnester 7 zuführen und dabei die manschettenförmige Vorformung des Banderolenstreifens 5' (Fig. 1, Fig. 5) erfolgt. Die einer Reihe R bzw. R' von Formnestern 7 zugeordneten Banderoliervorrichtungen 12 sind bei bekannten Maschinen als eine Gruppe, beispielsweise A (Fig. 1), in einer gemeinsamen Arbeitsebene C nebeneinander angeordnet, wobei in dieser Ebene auch zwei Gruppen, beispielsweise A und A' (Fig. 9), gegenüberliegend angeordnet sein können.

Die erfindungsmäße Ausführung der Maschine 1 weist eine Anordnung auf, bei der die Banderoliervorrichtungen 12 für mehrere Reihen R, R' von im Formgehäuse 6 ausgebildeten Formnestern 7 in zumindest zwei unterschiedlichen Arbeitsebenen C und D gruppiert sind. Die beiden in Fig. 1 bis 8 in einer ersten Ausführungsform der Maschine 1 dargestellten Gruppen A und B von Banderoliervorrichtungen 12 sind dabei mit einem Höhenabstand H übereinander angeordnet. In der Darstellung gemäß Fig. 1 wird dabei deutlich, daß die beiden Gruppen A und B vorteilhaft auf der zur Heizstation 3 abgewandten Seite des Formgehäuses 6 angeordnet sind.

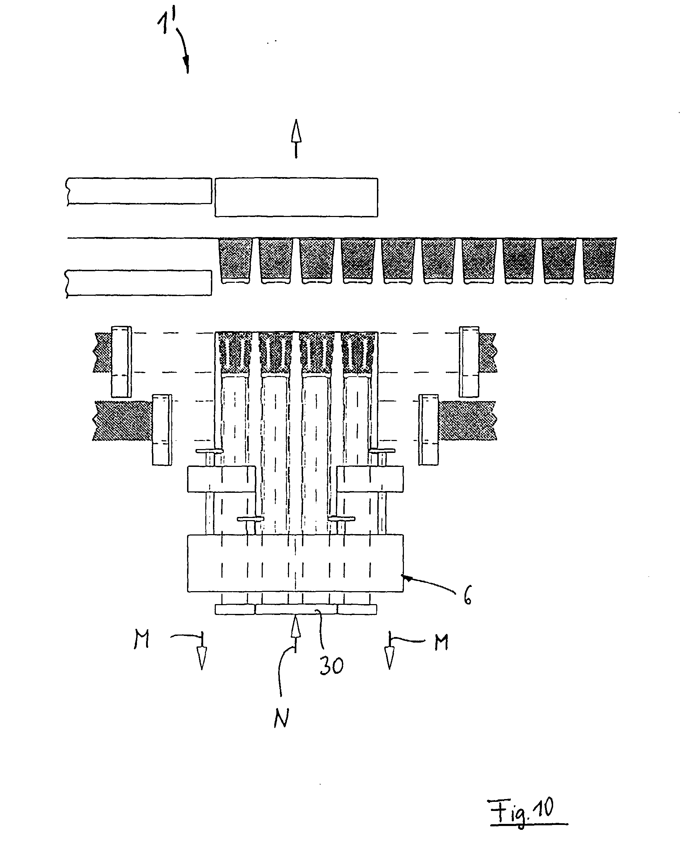

In einer zweiten Ausführungsform der Maschine 1' gemäß Fig. 9 und 10 wird deutlich, daß zwei übereinander angeordneten Gruppen A und B von in einer Zuführrichtung E bzw. E' arbeitenden Banderoliervorrichtungen 12 zwei Gruppen A' und B' von in entgegengesetzter Zuführrichtung G bzw. G' arbeitenden Banderoliervorrichtungen 12 gegenüberliegend zugeordnet sind. Anstelle dieser paarweise A, A' bzw. B, B' in gleichen Arbeitsebenen C, D gegenüberliegenden Banderoliervorrichtungen 12 ist denkbar, daß dem Formgehäuse 6 beispielsweise einerseits eine die zwei Gruppen A und B von Banderoliervorrichtungen 12 aufweisende Anordnung zugeordnet und diesen gegenüberliegend eine einzelne Gruppe (nicht dargestellt) von Bandoliervorrichtungen 12 so zugeordnet ist, daß in dieser Maschine insgesamt drei Reihen von Formnestern 7, in dem Formgehäuse 6 mit Banderolen beschickt werden. Damit wird deutlich, daß erfindungsgemäße Maschine mit der Übereinanderordnung der Banderoliervorrichtungen 12 eine geradzahlige oder ungeradzahlige Erhöhung der Anzahl der im Formgehäuse 6 vorgesehenen Reihen R, R' von Formnestern 7 ermöglicht und damit eine kunden-und maschinenspezifische Anpassung der zu banderolierenden Becheranzahl je Takt der Maschine 1 in weitgehend beliebigen Konfigurationen erreicht ist.

Die übereinander angeordneten Gruppen A, B bzw. A', B' von Banderoliervorrichtungen 12 sind in Zuführrichtung E, E' um den Abstand V der Formnesterreihen im Formgehäuse 6 versetzt zueinander angeordnet, so daß bei geringem Raumbedarf eine kompakte Konstruktion mit kurzen Zuführwegen erreicht ist.

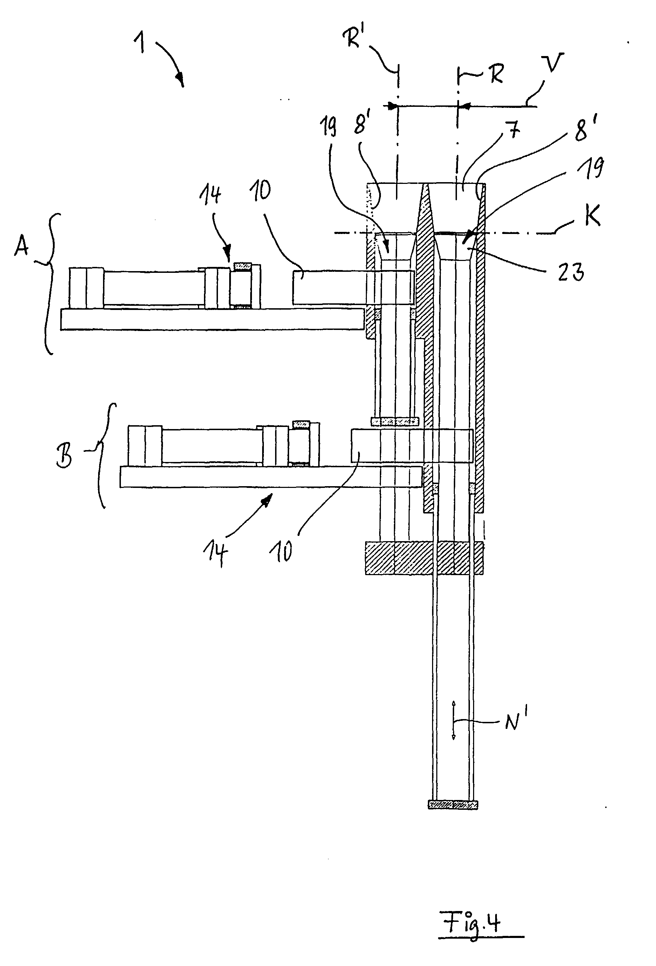

Die Zeichnungen gemäß Fig. 3 bis 6 verdeutlichen den konstruktiven Aufbau des mit den Banderoliervorrichtungen 12 zusammenwirkenden Formgehäuses 6, wobei dieses unterhalb der Formnester 7 zylindrische Aufnahmeräume 13, 15 für die Aufnahme der Banderolenstreifen 10 (Fig. 3) aufweist, die nach ihrer Einführung (Fig. 4) manschettenförmig 5' (Strichdarstellung in Fig. 5) vorgeformt werden. Diese Aufnahmeräume 13, 15 sind mit jeweiligen Einführschlitzen 9, 9' versehen, die ihrerseits den in den Arbeitsebenen C, D gruppierten Banderoliervorrichtungen 12 zugeordnet sind. Die Aufnahmeräume 13, 15 sind jeweils als Ringspalt ausgebildet und diesen ist als Hubglied 11 für die vorgeformten Banderolenstreifen 5' ein im Ringspalt auf- und abbeweglicher Ringträger 16, 17 zugeordnet.

Der Boden 8 der Formnester 7 ist zur Formung des Becherbodens (Fig. 1) von einem mittels einer Hubstange 18 bzw. 18' auf- und abbewegbaren Formstück 19 (Fig. 3) gebildet, wobei diese Hubstangen 18, 18' den jeweiligen ringspaltförmigen Aufnahmerahmen 13, 15 im Formgehäuse 6 innenseitig begrenzen. Die Darstellung gemäß Fig. 6 verdeutlicht, daß das Formstück 19 zur Freigabe einer ringspaltförmigen Öffnung 20 für die Banderoleneinführung in den Formraum des Formnestes 7 aus einer unteren Verschlußstellung (Fig. 3 bis 5) aufwärts in eine Freigabestellung (Fig. 6) bewegbar ist. Die Seitenwand 8' der Formnester 7 erweitert sich mit einem ersten Konuswinkel 22 nach oben und das Formstück 19 weist unterhalb der Ebene K, in der es mit der Formnestwand 8' in der Verschlußstellung (Fig. 5) in Eingriff gelangt, einen Schaftteil 23 auf, der sich ebenfalls nach oben konisch um einen zweiten Konuswinkel 24 erweitert. Der zweite Konuswinkel 24 ist dabei größer als der erste Konuswinkel 22 ausgebildet.

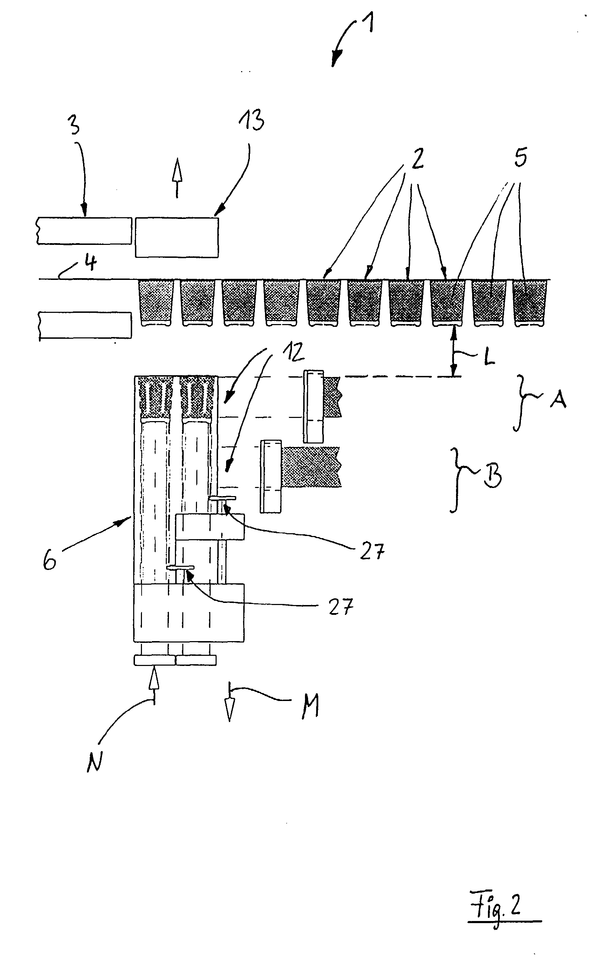

Die Prinzipdarstellung gemäß Fig. 2 verdeutlicht in Zusammenschau mit Fig. 1 den Bewegungsablauf im Bereich des Formgehäuses 6 beim Einschieben der manschettenförmig vorgeformten Banderolenstreifen 5' in die Formnester 7. Mit einem Bewegungspfeil M ist die Abwärtsbewegung des Formgehäuses 6 um ein Maß L unterhalb der geformten Becher 2 veranschaulicht, wobei dieser Bewegung in Richtung M eine Hubbewegung (Pfeil N) des Hubgliedes 11 im Bereich der Banderoliervorrichtungen 12 der Gruppe B überlagert ist. Mittels dieser Bewegungsüberlagerung gelangen die vorgeformten Banderolenstreifen 5' der Gruppen A und B aus ihrer Einführstellung gemäß Fig. 1 in die in Fig. 2 dargestellte Anlagestellung innerhalb des Formraumes der Formnester 7.

Dieser Einführvorgang der vorgeformten Banderolenstreifen 5' in die Formnester 7 wird durch die detailierten Zeichnungen gemäß Fig. 5 und 6 in Einzelheiten deutlich, wobei die jeweils der oberen Gruppe A von Banderoliervorrichtungen 12 zugeordneten Ringträger 16 durch die Abwärtsbewegung des Formgehäuses in ihrer Lage im Ringspalt 13 verändert werden und dabei der auf dem Ringträger 16 abgestützte Banderolenstreifen 5' (Fig. 5) durch die ringspaltförmige Öffnung 20 in das Formnest eingeführt wird (Fig. 6).

In der Ausführungsform gemäß Fig. 3 bis 6 ist die im Bereich des Aufnahmeraumes 15 vorgesehene Hubstange 18' mit dem Ringträger 17 durch einen nicht näher dargestellten Antrieb in Pfeilrichtung N' unabhängig von der Auf- und Abbewegung des Formgehäuses 6 so verlagerbar, daß der im Vergleich zu dem nebengeordneten Formnestern 7 der Guppe A längere Hubweg H' für den im Aufnahmeraum befindlichen vorgeformten Banderolenstreifen 5' durch eine höhere Vorschubgeschwindigkeit so ausgeglichen wird, daß sämtliche Banderolenstreifen 5' in einem Takt zeitgleich in den Formnestern 7 bereitgestellt werden.

Diese Phase der Banderolenzuführung ist in Fig. 5 und 6 dargestellt, wobei die beiden Banderolenstreifen 5' (von denen in Fig. 6 nur der im linken Formnest befindliche dargestellt ist) bei der Einführung in den Formraum durch die beiden Ringträger 16 und 17 abgestützt, am konischen Schaftteil 23 des Formstücks 19 geführt die Öffnung 20 durchlaufen und danach die Banderolen 5 durch ihre eleastischen Materialeigenschaften an der Seitenwandung 8' im Formnest 7 zur Anlage gelangen. Denkbar ist dabei auch, daß die Banderolenstreifen 5' in den Formnestern 7 über Anlagestifte oder eine an sich bekannte Vakuumansaugung gehalten sind (nicht dargestellt), so daß bei der Becherformung (Fig. 1) eine lagegenaue Verbindungsposition eingehalten wird.

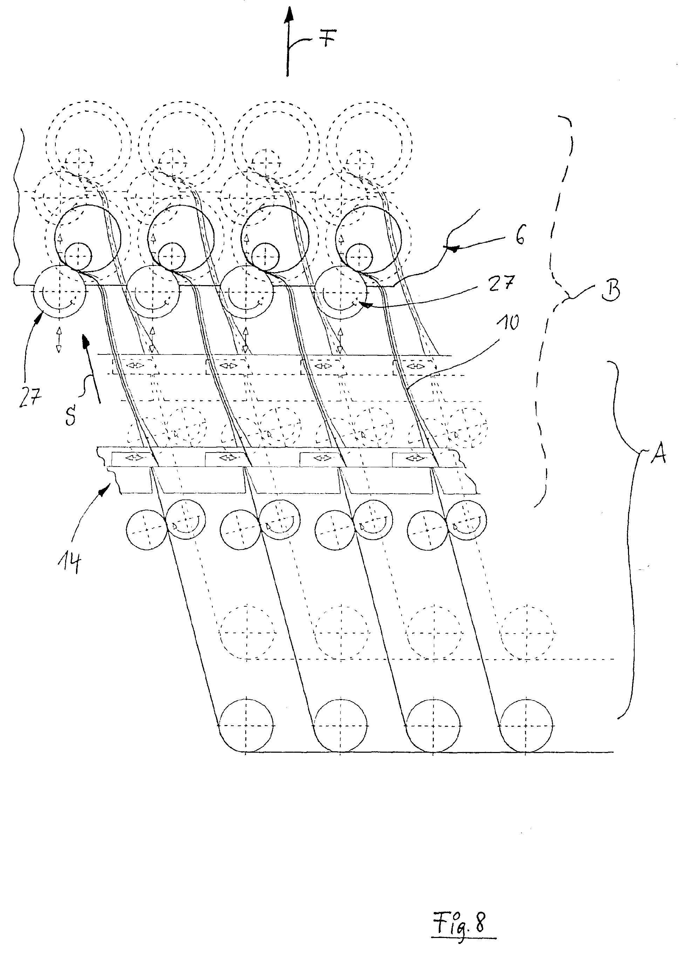

In den Draufsichten der Banderoliervorrichtungen 12 gemäß Fig. 7 und 8 ist die Führung der Banderolenstreifen 10 mittels jeweiliger über Servo-Motoren (nicht dargestellt) angetriebene und in ihrer Förderstellung veränderbare Vorschubrollen 26 und 27 veranschaulicht, wobei diese Vorschubrollen mit jeweiligen Haltestiften 28, 29, 29' (Fig. 7) so zusammenarbeiten, daß eine positionsgenaue Einbringung der Banderolenstreifen 10 in die Schneidvorrichtung 14 bzw. die jeweilige Aufnahmeräume 13 bzw. 15 erreicht wird.

In Fig. 9 und 10 ist die Maschine 1' mit einem vier Reihen von Formnestern 7 aufweisenden Formgehäuse 6 dargestellt, wobei diesem beidseits je zwei Gruppen A, B und A', B' von Banderoliervorrichtungen 12 mit entgegengesetzen Zuführrichtungen E, E' bzw. G, G' derart zugeordnet sind, daß eine gleichzeitige Banderolierung von vier Reihen von Behältern 2 im Bereich der Formvorrichtung 6 möglich ist. In diesen Prinzipdarstellungen sind die im wesentlichen gleichwirkenden Baugruppen der Maschine 1' nicht nochmals im einzelnen beschrieben. Die beiden in Hubrichtung N beweglichen Hubglieder der Maschine 1' sind in zweckmäßiger Ausführung über einen bei 30 angreifenden Antrieb so verbunden, daß damit der in Fig. 5 für die Hubstange 18' beschriebene Hubvorgang mit höherer Vorschubgeschwindigkeit für zwei Hubstangen erreicht ist.

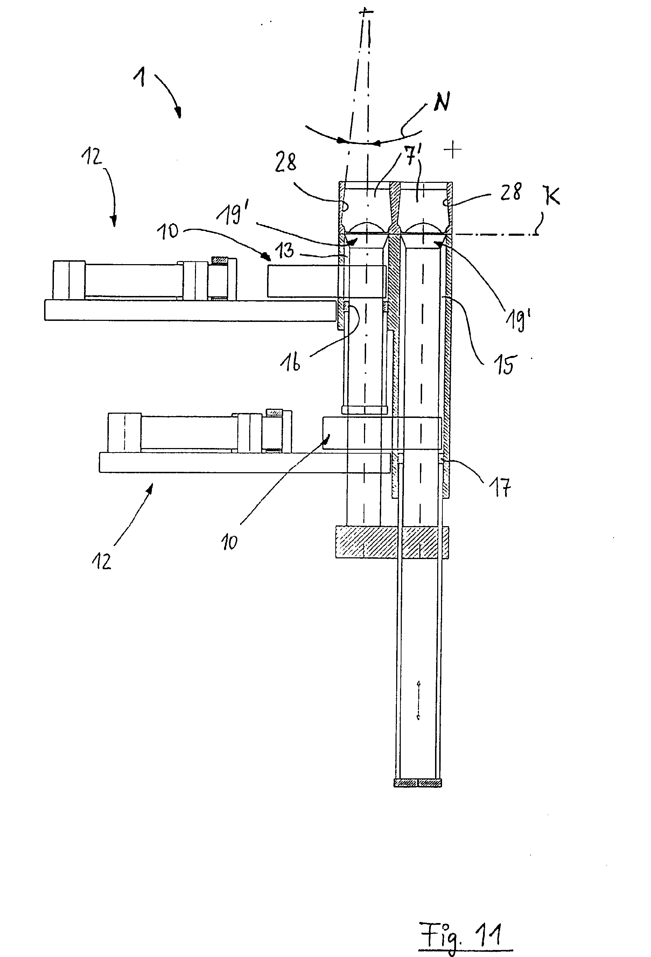

In den vorbeschriebenen Ausführungsformen ist die vorteilhafte Ausbildung des Formstückes 19 in Zusammenschau mit den nach oben konisch erweiterte Wandungen 8' aufweisenden Formnestern 7 beschrieben. In einer weiteren Ausführung gemäß Fig. 11 bis 15 ist dargestellt, daß die Seitenwand 28 der Formnester 7' sich nach unten hin konisch (Winkel N, Fig. 11) erweitert. Denkbar ist auch, daß die Formnester 7' im Bereich der Seitenwand mit einer oder mehreren Hinterschneidungen versehen sind (nicht dargestellt).

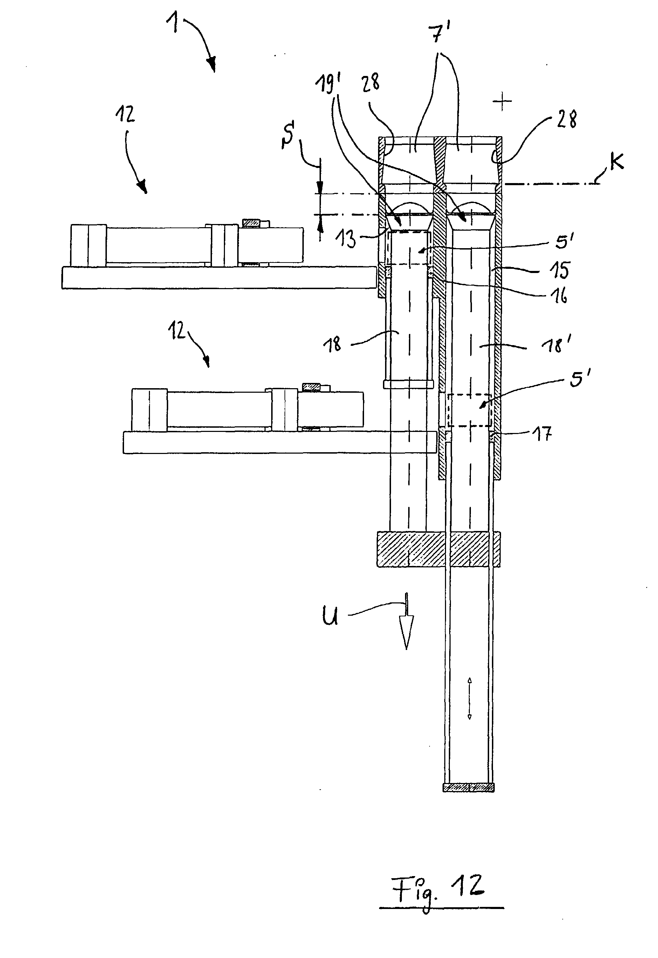

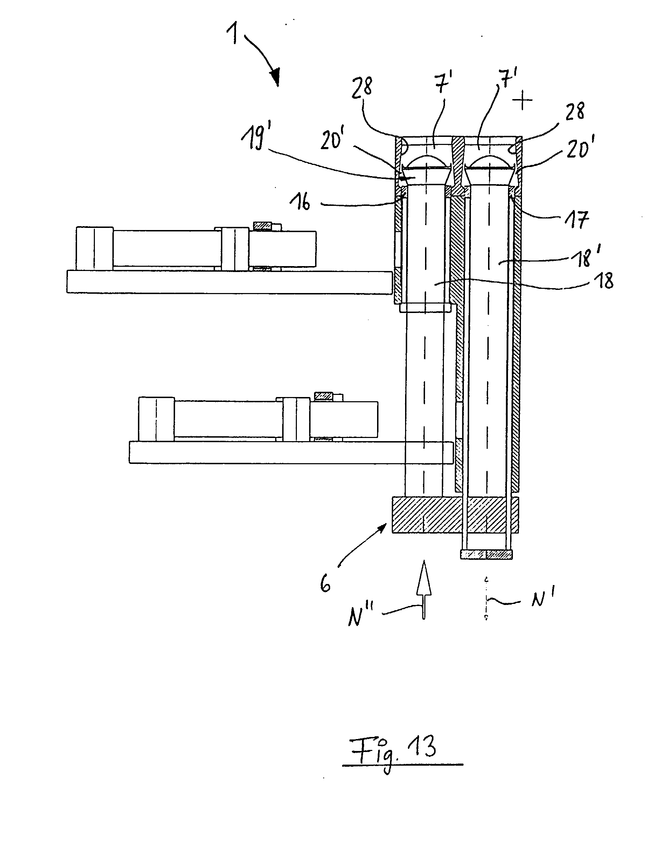

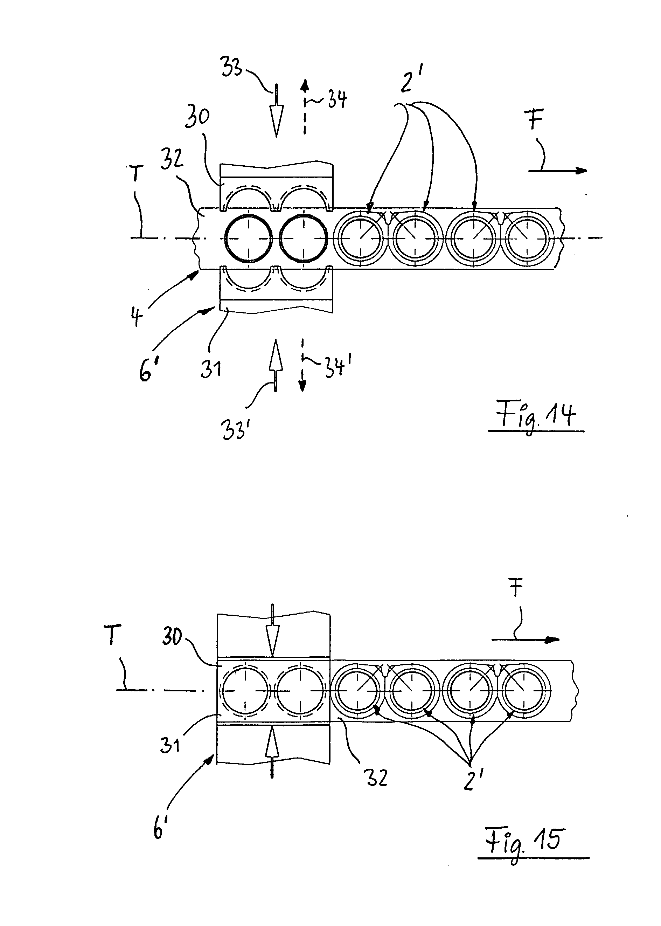

Bei einer derartigen Behälterkontur ist eine konstruktive Gestaltung der Formbaugruppe vorteilhaft, bei der das Formstück 19' zur Freigabe der geformten Becher 2' (Fig. 14) aus seiner Verschlußstellung abwärts (Fig. 12, Pfeil U) bewegbar ist. In dieser Abwärtsstellung (Abstand S in Fig. 12) des Formstücks 19' befinden sich die vorgeformten Banderolenstreifen 5' (ähnlich Fig. 5) in der Stellung oberhalb des jeweiligen Ringträgers 16 bzw. 17 im ringspaltförmigen Aufnahmeraum 13 bzw. 15. Bei einer nachfolgenden Bewegung N', N'' (Fig. 13) werden die Hubstangen 18 und 18' zu den Formnestern 7' hin so verlagert, daß das Formstück 19' zur Wandung 28 die ringspaltförmige Öffnung 20' freigibt. Die beiden Banderolenstreifen 5' werden mittels der Ringträger 16 und 17 in das jeweilige Formnest 7' eingeschoben (ähnlich Fig. 6). Im Formnest 7' sind die Banderolenstreifen 5' beispielsweise durch eine im Bereich der Wandung 28 über Saugöffnungen wirksame Vakuumpumpe (nicht dargestellt) so gehalten, daß eine vorgesehene Verbindungsposition bei der Becherformung (Fig. 15) eingehalten ist.

Zur Herstellung der gegenkonischen Becher 2' (Fig. 14) ist vorgesehen, daß das Formgehäuse 6' (Fig. 15) entlang einer vertikalen Teilungsebene T in gegenläufig bewegbare (Bewegungspfeile 33, 34; 33', 34' in Fig. 14) Gehäuseteile 30, 31 unterteilt und die Teilungsebene T dabei parallel zur Förderrichtung F der Kunststoffolienbahn 4 ausgerichtet ist. In zweckmäßiger Ausführung weist eine derartige Formmaschine 1 mehrere untereinander gleiche Formgehäuse 6' auf (nicht dargestellt), die nebeneinander mit zueinander parallel ausgerichteten Teilungsebenen T angeordnet sind und gemeinsam eine Formeinheit bilden. Für eine materialsparende Becherformung ist jedes der nebeneinander angeordneten Formgehäuse 6' von einem gesonderten Folienbahnsteifen 32 überlaufen, aus dem in getakteter Abfolge die Behälter 2' geformt und diese dabei mit der Banderole 5 versehen werden.

## Patentansprüche

1. Maschine zum reihenweisen Tiefziehen von becherförmigen Behältern (2) in einer Kunststoffolienbahn (4) und Anbringen einer Banderole (5) auf der Außenseite der Behälter bei deren Bildung, mit einem oberseitig von der Kunststoffolienbahn (4) überlaufenen Formgehäuse (6) mit in diesem ausgebildeten, in Reihen quer zur Förderrichtung (7) der Kunststoffolienbahn (4) angeordneten Formnestern (7), in deren Boden (8, 8') eine Öffnung (20) für eine Einführung eines manschettenförmig vorgeformten Banderolenstreifens (5') aus einem Bereich unterhalb des Formnestbodens (8) in den Formraum der Formnester (7) mittels eines Hubgliedes (11) vorgesehen ist, und mit einer der Anzahl der Formnester (7) entsprechenden Anzahl von Banderoliervorrichtungen (12) zum Abteilen von Banderolenstreifen (10) von einer Vorratsbahn, Zuführen der Banderolenstreifen (10) in einer im wesentlichen parallel zur Förderrichtung (F) der Kunststoffolienbahn (4) verlaufenden Richtung (S) in den Bereich unterhalb der Formnester (7) sowie deren manschettenförmigen (5') Vorformen, wobei die einer Reihe von Formnestern (7) zugeordneten Banderoliervorrichtungen (12) als Gruppe (A; B; A'; B') in einer gemeinsamen Arbeitsebene nebeneinander angeordnet sind, **dadurch gekennzeichnet**, daß bei in mehreren Reihen (R; R') im Formgehäuse (6) ausgebildeten Formnestern (7) die diesen Reihen zugeordneten Gruppen von Banderoliervorrichtungen (A, B; A', B') in zumindest zwei unterschiedlichen Arbeitsebenen (C; D) angeordnet sind.

2. Maschine nach Anspruch 1, dadurch gekennzeichnet, daß die Gruppen (A, B) von Banderoliervorrichtungen (12) übereinander angeordnet (Höhe H) sind.

3. Maschine nach Anspruch 1, dadurch gekennzeichnet, daß einer Anzahl von übereinander angeordneten Gruppen (A, B) von in einer ersten Zuführrichtung (E, E') arbeitenden Banderoliervorrichtungen (12) zumindest eine Gruppe von in entgegengesetzter Zuführrichtung arbeitenden Banderoliervorrichtungen (12) gegenüberliegt.

4. Maschine nach Anspruch 3, dadurch gekennzeichnet, daß in entgegengesetzter Zuführrichtung (E, E'; G, G') arbeitende Gruppen (A, B; A', B') von Banderoliervorrichtungen (12) einander paarweise (A, A' und B, B') in gleichen Arbeitsebenen (C, D) gegenüberliegen.

5. Maschine nach Anspruch 1 bis 4, dadurch gekennzeichnet, daß die übereinander angeordneten Gruppen (A, B; A', B') von Banderoliervorrichtungen (12) in oder entgegen der Zuführrichtung (E, E'; G, G') um den Abstand (V) der Formnestreihen (R, R') im Formgehäuse (6) versetzt angeordnet sind.

6. Maschine nach Anspruch 1 bis 5, dadurch gekennzeichnet, daß das Formgehäuse (6) unterhalb der Formnester (7) zylindrische Aufnahmeräume (13, 15) für die Aufnahme der bei ihrer Einführung manschettenförmig (5') vorgeformten Banderolenstreifen (10) aufweisen, die den in unterschiedlichen Arbeitsebenen (C, D) gruppierten Banderoliervorrichtungen (12) zugeordnete Einführschlitze (9; 9') aufweisen.

7. Maschine nach Anspruch 6, dadurch gekennzeichnet, daß die Aufnahmeräume (13, 15) als Ringspalt ausgebildet sind und für die vorgeformten Banderolenstreifen (5') ein im Ringspalt auf- und abbeweglicher Ringträger (16, 17) als das Hubglied (11) vorgesehen ist.

8. Maschine nach Anspruch 1 bis 7, dadurch gekennzeichnet, daß die jeweils einer oberen Gruppe (A) von Banderoliervorrichtungen (12) zugeordneten Ringträger (16) durch Auf- und Abbewegung des Formgehäuses (6) in ihrer Lage im Ringspalt (15) veränderbar sind.

9. Maschine nach Anspruch 1 bis 8, dadurch gekennzeichnet, daß die einer oberen oder unteren Gruppe (A; B) von Banderoliervorrichtungen (12) zugeordneten Ringträger (16, 17) mittels eines Antriebs unabhängig von einer Auf- und Abbewegung des Formgehäuses (6) auf- und abbewegbar sind.

10. Maschine nach einem der Ansprüche 1 bis 9, dadurch gekennzeichnet, daß der Boden (8) der Formnester (7) von einem mittels einer Hubstange (18, 18') auf- und abbewegbaren Formstück (19; 19') gebildet ist, wobei die Hubstange (18, 18') den ringspaltförmigen Aufnahmeraum (13, 15) im Formgehäuse (6) innenseitig begrenzt.

11. Maschine nach Anspruch 10, dadurch gekennzeichnet, daß das Formstück (19; 19') zur Freigabe einer ringspaltförmigen Öffnung (20; 20') für die Banderoleneinführung in den Formraum des Formnestes (7; 7') aus einer Verschlußstellung in eine Freigabestellung bewegbar ist.

12. Maschine nach Anspruch 11, dadurch gekennzeichnet, daß die Seitenwand (8') der Formnester (7) sich nach oben konisch erweitert und das Formstück (19) unterhalb der Ebene (K), in der es mit der Formnestwand (8') in der Verschlußstellung in Eingriff gelangt, einen Schaftteil (23) aufweist, der sich ebenfalls nach oben hin konisch erweitert und in Freigabestellung des Formstücks (19) mit der Seitenwand (8') die als ein Führungsspalt vorgesehene ringspaltförmige Öffnung (20) begrenzt.

13. Maschine nach Anspruch 11, dadurch gekennzeichnet, daß die Seitenwand (28) der Formnester (7') sich nach unten hin konisch erweitert und/oder eine oder mehrere Hinterschneidungen aufweist, und das Formstück (19') aus seiner Verschlußstellung abwärts bewegbar ist.

14. Maschine nach einem der Ansprüche 1 bis 13, dadurch gekennzeichnet, daß das Formgehäuse (6') entlang einer vertikalen Teilungsebene (T) in gegenläufig bewegbare Gehäuseteile (30, 31) unterteilt und die Teilungsebene (T) parallel zur Förderrichtung (F) der Kunststoffolienbahn (4) ausgerichtet ist.

15. Maschine nach Anspruch 14, dadurch gekennzeichnet, daß sie mehrere untereinander gleiche Formgehäuse (6') umfaßt, die nebeneinander mit zueinander parallel ausgerichteten Teilungsebenen (T) angeordnet sind und gemeinsam eine Formeinheit bilden.

16. Maschine nach Anspruch 14 oder 15, dadurch gekennzeichnet, daß jedes der nebeneinander angeordneten Formgehäuse (6') von einem gesonderten Folienbahnstreifen (32) überlaufen ist.
